# EUROPÄISCHE PATENTANMELDUNG

(11) **EP 1 754 628 A2**
(43) Veröffentlichungstag der Anmeldung: **21.02.2007**
(21) Anmeldenummer: 06016589.1
(22) Anmeldetag: 08.08.2006
(51) Int. Cl.: B60P 3/38, B60P 3/39

(54) **Wohnmobil mit einem Hubbett**

(30) Priorität: 19.08.2005 DE 102005039235
(71) Anmelder: Inter Agilis Handelsgesellschaft m.b.H., 5300 Hallwang (AT)
(72) Erfinder: Hanusch, Marion, 83435 Bad Reichenhall (DE); Hanusch, Johann, 83435 Bad Reichenhall (DE)
(74) Vertreter: Berngruber, Otto

(57) **Zusammenfassung**

Ein Wohnmobil, das aus einem Kastenwagen gebildet ist, weist ein Hubbett (2) auf, das sich in Längsrichtung des Kastenwagens (1) erstreckt. Der Bettrahmen (3) ist zur Verschwenkung des Hubbettes (2) zwischen der Aufbewahrungsposition mit geringem Abstand zum Dach (6) des Kastenwagens (1) und einer unteren Liegeposition mit seinen beiden Außenlängsholmen (11a, 11b) über jeweils zwei Hebelarme (12a, 12b; 13a, 13b) unter Bildung eines Gelenkvierecks mit der Karosserie des Kastenwagens (1) gelenkig verbunden.

## Beschreibung

Die Erfindung bezieht sich auf ein Wohnmobil aus einem Kastenwagen und einem Hubbett, das sich in Längsrichtung des Kastenwagens erstreckt und zwischen einer Aufbewahrungsposition mit geringem Abstand zum Dach des Kastenwagens und einer unteren Liegeposition bewegbar ist.

Aufgrund der beengten Raumverhältnisse in Wohnmobilen ist es notwendig, die Hubbetten so anzubringen, dass sich in der Aufbewahrungsposition des Hubbetts ein möglichst großer Freiraum ergibt, damit sich Personen ungehindert im Inneren des Wohnmobils bewegen können.

Diese Anforderung kann bei den sogenannten integrierten Fahrzeugen ohne größere Schwierigkeiten erfüllt werden, bei denen auf das Fahrwerk des Fahrzeugs eine entsprechend geräumige Karosserie montiert wird. Schwierigkeiten treten jedoch dann auf, wenn der Innenraum des Wohnmobils begrenzt ist, was insbesondere bei Wohnmobilen der Fall ist, die aus einem Kastenwagen mit vorgegebener Karosserie gebildet werden.

Kastenwagen werden daher meist mit einer zusätzlichen, oberen Dachschale versehen, um einen Schlafraum zu bilden, der über einen Durchstieg in der unteren Dachschale über eine Leiter vom Fahrgastraum zugänglich ist. Der Zugang zum Bett wird dadurch schwierig und unbequem.

Auch ist bereits ein aus einem Kastenwagen gebildetes Wohnmobil mit einem Hubbett gemäß dem Oberbegriff des Anspruchs 1 aus DE 201 18 211 U1 bekannt. Das bekannte Hubbett ist dabei an seinem vorderen Ende um eine Querachse verschwenkbar oberhalb der Fahrerkabine angelenkt. Damit kann das Bett zur Aufbewahrung schräg nach oben geklappt werden. In der Liegeposition ist es demgegenüber waagerecht in Höhe der Schwenkachse und damit in Höhe des Fahrkabinenhimmels angeordnet. Um in der Liegeposition auf das Bett zu gelangen, ist daher ebenfalls eine Leiter erforderlich. D.h., das bekannte Hubbett ist praktisch genauso umständlich zugänglich wie das Bett in Wohnmobilen mit zwei Dachschalen.

Aufgabe der Erfindung ist es, ein Hubbett für ein aus einem Kastenwagen gebildetes Wohnmobil bereitzustellen, das einerseits in der Liegeposition leicht zugänglich ist und in der Aufbewahrungsposition genügend Freiraum im Innenraum des Wohnmobils bildet, um sich dort ungehindert bewegen zu können.

Dies wird erfindungsgemäß mit dem im Anspruch 1 gekennzeichneten Wohnmobil erreicht. In den Unteransprüchen sind vorteilhafte Ausgestaltungen der Erfindung wiedergegeben.

Das erfindungsgemäße Wohnmobil stellt einen serienmäßigen Kastenwagen dar, der lediglich im Inneren zu einem Wohnmobil ausgebaut worden ist. Der serienmäßige Kastenwagen, der einen Blechaufbau und im Allgemeinen eine rechtsseitige Schiebetür in Ländern mit Rechtsverkehr bzw. eine linksseitige Schiebetür in Ländern mit Linksverkehr, eine Breite von etwa 2 m oder weniger sowie eine Länge von ca. 5 m und mehr aufweist, wird vom Wohnmobil-Hersteller mit entsprechender Reisemobiltechnik, Möbeleinbauten und dergleichen ausgestattet. Diese Wohnmobile finden immer mehr Verbreitung, u.a. weil sie wegen ihrer Kompaktheit noch auf normale PKW-Stellplätze passen und mit ihrem PKW-ähnlichen Komfort und Fahrverhalten auch als alleiniges Universalfahrzeug genutzt, also außer zum Reisen auch als PKW eingesetzt werden können.

Vorzugsweise werden erfindungsgemäß Kastenwagen mit seriellem Hochdach verwendet, bei dem sich über den Fahrerkabinenraum ein nach hinten geneigter Frontwandabschnitt oberhalb der Windschutzscheibe erstreckt, da Kastenwagen mit Hochdach einen hinreichend großen und hohen Freiraum bilden, um sich darin ungehindert bewegen zu können. Ein Beispiel für einen solchen Kastenwagen ist der Renault Master mit seriellem Hochdach oder Maxidach. Es können auch Kastenwagen mit aufgesetztem Hochdach verwendet werden.

Das erfindungsgemäße Wohnmobil weist ein Hubbett mit einem Bettrahmen auf. Auf dem Bettrahmen ist ein Lattenrost oder dergleichen angeordnet, der die Auflagefläche für eine Matratze oder dergleichen Polster bildet. Der Bettrahmen wird zusammen mit dem Lattenrost und der Matratze zwischen der Aufbewahrungsposition und der Liegeposition verschwenkt. Dazu sind an jedem der beiden Außenlängsholme des Bettrahmens mindestens zwei Hebelarme vorgesehen, die mit der Karosserie des Kastenwagens gelenkig verbunden sind, um ein Gelenkviereck zu bilden.

Bei dem erfindungsgemäßen Wohnmobil kann das Bett so weit nach unten in die Liegeposition geschwenkt werden, dass es sich beispielsweise in Höhe der Rückenlehnen des Fahrersitzes und - sofern vorhanden - des Beifahrersitzes befindet, also in einer Höhe von etwa einem Meter oder weniger über dem Boden des Fahrzeugs. Es ist damit gegebenenfalls ganz ohne Hilfsmittel leicht zugänglich. Unter Umständen kann auch eine Trittstufe vorgesehen sein, die beispielsweise in die Sitztruhe eingebaut wird, die sich am hinteren Ende des nach unten in die Liegeposition geschwenkten Bettes befindet.

Das Hubbett ist dabei vorzugsweise in der Liegeposition mit seinem vorderen Ende im Bereich des Fahrersitzes und - sofern vorhanden - des Beifahrersitzes angeordnet, vorzugsweise recht knapp, also 10 cm oder weniger, mit seinem vorderen Ende vom Lenkrad entfernt. Der Fahrer- und Beifahrersitz ist bei Wohnmobilen im Allgemeinen um eine senkrechte Achse drehbar, um eine Sitzgruppe, beispielsweise mit der dahinter angeordneten Sitzbank, bilden zu können. Damit die Rückenlehne des Fahrer- bzw. Beifahrersitzes das Verschwenken des Hubbettes in die Liegeposition nicht behindert, werden der Fahrer- und der Beifahrersitz gegenüber der Fahrposition um 90 ° mit der Rückenlehne an die eine bzw. andere Seitenwand des Kastenwagens gedreht, um für das in die Liegeposition geschwenkte Bett Platz zu schaffen.

In der Liegeposition kann das Hubbett oberhalb oder unterhalb der Armlehnen des Fahrer- oder Beifahrersitzes angeordnet sein. Damit können die Armlehnen des Fahrer- bzw. Beifahrersitzes bei zu der einen bzw. anderen Seitenwand gedrehter Rückenlehne das Verschwenken des Bettes in die Liegeposition nicht behindern.

In der nach oben geschwenkten Aufbewahrungsposition ist das Bett mit geringem Abstand zum Dach angeordnet. Bei einem Kastenwagen mit Hochdach ist dabei die Matratze am hinteren Ende mit einem geringen Abstand von beispielsweise 10 cm oder weniger vom Hochdach entfernt, während ihr Abstand am vorderen Ende des Bettrahmens zum geneigten Frontwandabschnitt des Fahrerkabinenraums beispielsweise ebenfalls nur 10 cm oder weniger beträgt. Bei einem Kastenwagen mit Hochdach ist damit das Bett in der Aufbewahrungsposition nach vorne schräg nach unten geneigt.

An jeder Seite des Bettrahmens ist vorzugsweise eine Gasdruckfeder oder dergleichen Stoßdämpfer oder Federelement vorgesehen, das beim Verschwenken des Hubbettes betätigt wird.

Das erfindungsgemäße Hubbett ist vorzugsweise verlängerbar ausgebildet. Dazu kann ein ausklappbares Segment vorgesehen sein. Vorzugsweise ist das Hubbett jedoch ausziehbar. Dazu kann der auf dem Bettrahmen angeordnete Lattenrost ausziehbar sein oder der Bettrahmen.

Dabei weist der Bettrahmen zum Ausziehen vorzugsweise ein ausziehbares Teil mit zwei von den Außenlängsholmen des Bettrahmens geführten Längsholmen auf, welche vorzugsweise an ihren hinteren Enden durch einen Querholm verbunden sind. Die Längsholme des Ausziehteils können dabei in den Außenlängsholmen des Bettrahmens teleskopierbar angeordnet sein. Um ein Verkanten zu verhindern, sind die Außenlängsholme des Bettrahmens und die Längsholme des Ausziehteils dabei vorzugsweise als Rundrohre ausgebildet.

Das erfindungsgemäße Hubbett ist vorzugsweise als Doppelbett ausgebildet. Dabei kann wenigstens eine Doppelbetthälfte ausziehbar sein, beispielsweise durch einen entsprechend ausgebildeten Lattenrost oder durch einen Mittellängsholm des Bettrahmens. Dabei kann zum Ausziehen der wenigstens einen Doppelbetthälfte ein Ausziehteil vorgesehen sein, das zwei von einem der beiden Außenlängsholme bzw. dem Mittellängsholm des Bettgestells geführte, durch einen Querholm verbundene Längsholme aufweist.

Nachstehend ist eine Ausführungsform des erfindungsgemäßen Wohnmobils anhand der Zeichnung beispielhaft näher erläutert. Darin zeigen:
- Figur 1 und 2: eine schematische Darstellung des Hubbettes im vorderen Teil des Kastenwagens in der Liegebzw. Aufbewahrungsposition, wobei die Verschwenkvorrichtung vereinfacht dargestellt ist und die vordere Seitenwand sowie die vorderen Hebelarme weggelassen sind;
- Figur 3: eine Draufsicht auf das Hubbett in der Liegeposition gemäß Figur 1; und
- Figur 4: eine perspektivische Darstellung der gesamten Verschwenkvorrichtung in der Aufbewahrungsposition.

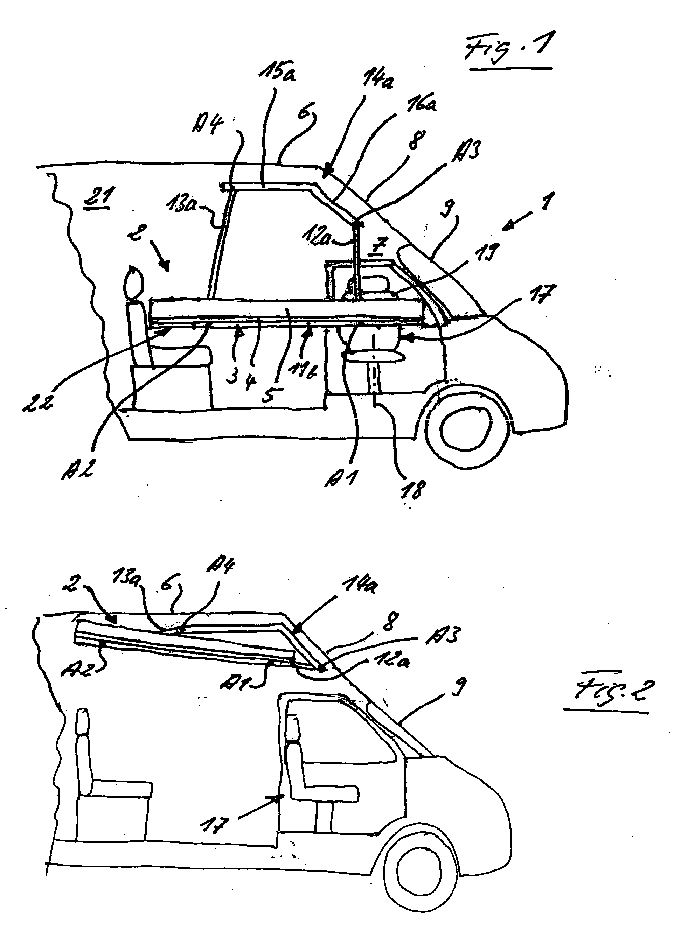

Gemäß Figur 1 und 2 weist ein Wohnmobil in Form eines Kastenwagens 1 ein Hubbett 2 auf, das sich in Längsrichtung des Kastenwagens 1 erstreckt. Das Hubbett 2 weist einen Bettrahmen 3 auf, auf dem ein Lattenrost 4 angeordnet ist, auf dem eine Matratze 5 liegt.

Der Kastenwagen 1 weist ein Hochdach 6 auf. Über dem Fahrerkabinenraum 7 erstreckt sich ein nach hinten geneigter Frontwandabschnitt 8 oberhalb der Windschutzscheibe 9.

An dem Außenlängsholm 11b des Bettrahmens 3 ist vorne und hinten jeweils ein Hebelarm 12a bzw. 13a um eine waagerechte, zum Fahrzeug quer verlaufende Achse A1 bzw. A2 verschwenkbar angelenkt. Mit seinem anderen Ende ist jeder Hebelarm 12a bzw. 13a mit der Karosserie des Kastenwagens 1 gelenkig verbunden, und zwar um waagerechte, zum Fahrzeug quer verlaufende Achsen A3 und A4 verschwenkbar.

Dazu ist an den beiden Längsseitenwänden des Kastenwagens 1 jeweils ein Längsträger 14a befestigt, der einen waagerechten Abschnitt 15a unter dem Hochdach 6 und einen schräg nach unten geneigten Abschnitt 16a aufweist. Am hinteren Ende des waagerechten Abschnitts 15a ist der Hebelarm 13a angelenkt, am vorderen Ende des geneigten Abschnitts 16a der Hebelarm 12a. Der vordere Hebelarm 12a ist kürzer ausgebildet als der hintere Hebelarm 13a, da er an einer tieferen Stelle angelenkt ist.

Damit bilden die beiden Hebelarme 12a, 13a, der Längsaußenholm 11a und der Längsträger 14a ein Gelenkviereck mit parallel zueinander verlaufenden Schwenkachsen.

Der Fahrersitz 17 ist um seine Hochachse 18 verschwenkbar.

Gemäß Figur 1 ist das Hubbett 2 in seiner waagerechten Liegeposition mit seinem vorderen Ende nahe dem nicht dargestellten Lenkrad angeordnet. Dabei ist der Fahrersitz 17 so gedreht, dass seine Rückenlehne 19 der benachbarten Seitenwand 21 bzw. der Fahrertür zugewandt ist.

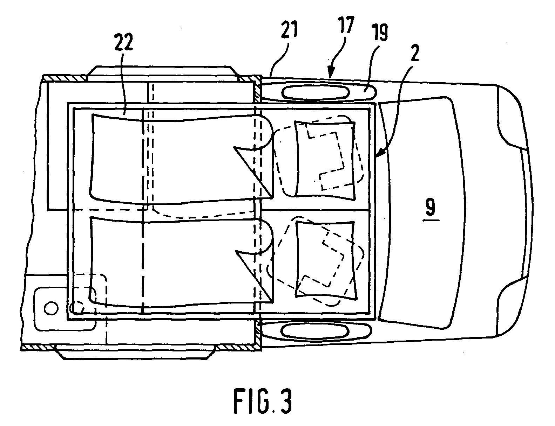

Das Hubbett 2 befindet sich also in der Liegeposition mit seinem vorderen Ende im Bereich des Fahrersitzes 17 in Höhe von dessen Rückenlehne 19. Zwischen dem der Seitenwand 21 benachbarten in Figur 1 und 2 nicht sichtbaren Außenlängsholm 11a des Bettrahmens 3 und der Seitenwand 21 ist ein solcher Abstand vorgesehen, dass die zu der Fahrertür gedrehte Rückenlehne 19 des Fahrersitzes 17 dazwischen Platz findet (Figur 3).

Wie in Figur 1 und 3 angedeutet, ist der Bettrahmen 3 am hinteren Ende mit einem Ausziehteil 22 versehen.

In der in Figur 2 dargestellten Aufbewahrungsposition ist das Bett an seinem hinteren Ende mit geringem Abstand von maximal 50 cm, vorzugsweise maximal 30 cm vom Hochdach 6 und mit seinem vorderen Ende mit geringem Abstand von maximal 50 cm, insbesondere maximal 20 cm zum Frontwandabschnitt 8 schräg nach vorne geneigt angeordnet.

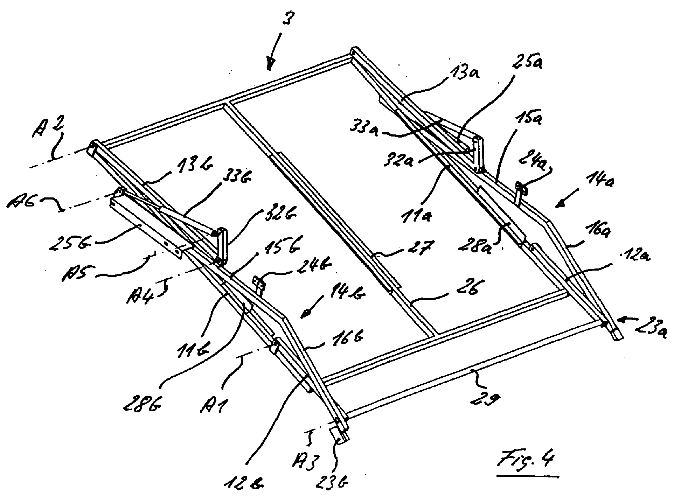

Gemäß Figur 4 weist jeder Längsträger 14a, 14b drei Befestigungspunkte 23a, 23b; 24a, 24b; 25a, 25b zur Befestigung an der Karosserie des Kastenwagens 1 auf. Der vordere Befestigungspunkt 23a, 23b dient zur Befestigung an der A-Säule des Kastenwagens 1, die zwischen der Windschutzscheibe 9 und der Fahrer- bzw. Beifahrertür verläuft. Mit dem Befestigungspunkt 24a, 24b ist der Längsträger 14a, 14b im Bereich der B-Säule an der Karosserie befestigt, die hinter der Fahrer- bzw. Beifahrertür verläuft, während der Befestigungspunkt 25a, 25b, der als Winkelprofil ausgebildet ist, zur Befestigung an der nicht dargestellten Längstraverse des Hochdaches 6 dient.

Aus Figur 4 geht auch hervor, dass der Bettrahmen 3 mit einem Mittellängsholm 26 versteift ist. Der Mittellängsholm 26 ist mit einem aus Winkelprofilen gebildeten Auflager 27 für den Lattenrost 4 versehen. Ferner sind als Winkelprofil ausgebildete Anschläge 28a, 28b für den Lattenrost 4 an den Außenlängsholmen 11a, 11b angebracht. Zwischen den an den Längsträgern 14a, 14b angelenkten Enden der kurzen Hebelarme 12a, 12b ist ein Quersteg 29 zur Versteifung befestigt.

Aus Figur 4 geht ferner hervor, dass die hinteren Hebelarme 13a, 13b jeweils als zweiarmige Winkelhebel ausgebildet sind. Dabei ist an dem von dem Bettrahmen 3 abgewandten Hebelarm 32a, 32b ein Gasdruckfeder 33a, 33b um eine zu den Achsen A1 bis A4 parallele Achse A5 verschwenkbar angelenkt, die mit ihrem anderen Ende am hinteren Ende des Längsträgers 14a, 14b um eine zu den Achsen A1 bis A5 parallele Achse A6 verschwenkbar befestigt ist.

## Patentansprüche

1. Wohnmobil aus einem Kastenwagen (1) mit einem Hubbett (2), das sich in Längsrichtung des Kastenwagens (1) erstreckt und zwischen einer Aufbewahrungsposition mit geringem Abstand vom Dach (6) des Kastenwagens und einer unteren Liegeposition bewegbar ist, **dadurch gekennzeichnet, dass** das Hubbett (2) einen Bettrahmen (3) aufweist, der zur Verschwenkung des Hubbettes (2) zwischen der Aufbewahrungs- und der Liegeposition mit seinen beiden Außenlängsholmen (11a, 11b) über jeweils mindestens zwei Hebelarme (12a, 12b; 13a, 13b) unter Bildung eines Gelenkvierecks mit der Karosserie des Kastenwagens (1) gelenkig verbunden ist.

2. Wohnmobil nach Anspruch 1, **dadurch gekennzeichnet, dass** der Fahrersitz (17) um eine senkrechte Achse (18) drehbar ausgebildet ist, das Hubbett (2) in der Liegeposition mit seinem vorderen Ende im Bereich des Fahrersitzes (17) in Höhe von dessen Rückenlehne (19) angeordnet ist und der Außenlängsholm (11a) des Bettrahmens (3) von der Seitenwand (21) des Kastenwagens (1) in einem mindestens der Dicke der Rückenlehne (19) entsprechenden Abstand angeordnet sind.

3. Wohnmobil nach Anspruch 1, **dadurch gekennzeichnet, dass** das Hubbett (2) in der Liegeposition ausziehbar ausgebildet ist.

4. Wohnmobil nach Anspruch 1, **dadurch gekennzeichnet, dass** eine Gasdruckfeder (33a, 33b) vorgesehen ist, die einerseits an der Karosserie angelenkt ist und andererseits mit dem Bettrahmen 3 gelenkig verbunden ist.

5. Wohnmobil nach Anspruch 1, **dadurch gekennzeichnet, dass** der Kastenwagen (1) ein Hochdach (6) mit einem Fahrerkabinenraum (7) mit nach hinten geneigtem Frontwandabschnitt (8) oberhalb der Windschutzscheibe (9) aufweist und das Hubbett (2) in der Aufbewahrungsposition mit seinem hinteren Ende mit geringem Abstand vom Hochdach (6) und mit seinem vorderen Ende mit geringem Abstand vom Frontwandabschnitt (7) schräg nach vorne geneigt angeordnet ist.

6. Wohnmobil nach Anspruch 1 und 5, **dadurch gekennzeichnet, dass** die beiden vorderen Hebelarme (12a, 12b) im Fahrerkabinenraum (7) an der Karosserie an einer tieferen Stelle angelenkt und kürzer ausgebildet sind als die hinteren Hebelarme (13a, 13b).

7. Wohnmobil nach Anspruch 1, **dadurch gekennzeichnet, dass** die beiden Hebelarme (12a, 12b; 13a, 13b) an jedem Außenlängsholm (11a, 11b) jeweils an einem Längsträger (14a, 14b) angelenkt sind, wobei die Längsträger (14a, 14b) an den Säulen und/oder den Längstraversen der Karosserie des Kastenwagens (1) befestigt sind.

8. Wohnmobil nach Anspruch 5, 6 und 7, **dadurch gekennzeichnet, dass** jeder Längsträger (14a, 14b) einen waagerechten Abschnitt (15a, 15b) unter dem Hochdach (6) und einen schräg nach unten geneigten vorderen Abschnitt (16a, 16b) aufweist.

9. Wohnmobil nach Anspruch 8, **dadurch gekennzeichnet, dass** der vordere Längsträgerabschnitt (16a, 16b) an der A-Säule befestigt ist.

10. Wohnmobil nach Anspruch 4 und 7, **dadurch gekennzeichnet, dass** die Gasdruckfedern (33a, 33b) an den Längsträgern (14a, 14b) angelenkt sind.

11. Wohnmobil nach Anspruch 4 oder 10, **dadurch gekennzeichnet, dass** die Gasdruckfedern (33a, 33b) mit ihrem von der Karosserie abgewandten Ende an einem der Hebelarme (13a, 13b) angelenkt sind.

12. Wohnmobil nach Anspruch 11, **dadurch gekennzeichnet, dass** der Hebelarm (13a, 13b) als zweiarmiger Winkelhebel ausgebildet und die Gasdruckfeder (33a, 33b) an dem von dem Bettrahmen (3) abgewandten Hebelarm (32a, 32b) angelenkt ist.
